# EUROPEAN PATENT APPLICATION

(11) **EP 2 699 016 A1**
(43) Date of publication of application: **19.02.2014**
(21) Application number: 13180039.3
(22) Date of filing: 12.08.2013
(51) Int. Cl.: H04N 21/475, H04N 21/482

(54) **Method of collectively configuring list items and terminal using the same**

(30) Priority: 13.08.2012 KR 20120088515
(71) Applicant: Alticast Corporation, Seoul 137-858 (KR)
(72) Inventor: Hyoung, Da-Hye, 501-848 Gwangju (KR); Park, Jong-Hoon, 138-700 Seoul (KR); Nam, Sung-Woo, 100-754 Seoul (KR)
(74) Representative: Nederlandsch Octrooibureau

(57) **Abstract**

A method of collectively configuring a setting, such as for viewing restrictions, etc., for a multiple number of configurable list items, such as program list items, and a user terminal using this method are disclosed. The method includes selecting at least one from among configurable list items and including the selected configurable list items in a first setting window. Here, the configurable list items included in the first setting window may be collectively configured to a particular setting.

## Description

### BACKGROUND

### 1. Technical Field

The present invention relates to a method of collectively configuring list items and to a terminal using this method, especially a TV.

### 2. Description of the Related Art

With the TV evolving into the smart TV in recent times, it is now possible to set viewing restrictions on certain TV programs.

A typical method for setting a viewing restriction is to select a particular program and then specifically configure the viewing restriction options for the selected program. However, with this method, it can be very time-consuming and complicated to configure viewing restrictions for several programs.

### SUMMARY

An aspect of the invention is to provide a method of collectively configuring the settings, such as for viewing restrictions, etc., for a multiple number of configurable list items such as program list items, for example, and to provide a user terminal using this method.

To achieve the objective above, an embodiment of the invention provides a method of collectively configuring list items at a terminal that includes selecting at least one from among configurable list items and including the selected configurable list items in a first setting window. Here, the configurable list items included in the first setting window may be collectively configured to a particular setting.

Another embodiment of the invention provides a method of collectively configuring list items at a terminal that includes displaying configurable list items and collectively configuring at least one of the displayed configurable list items to a particular setting.

Still another embodiment of the invention provides a method of collectively configuring list items at a terminal that includes receiving configurable list items from a first terminal by a second terminal; and collectively configuring at least one of the received configurable list items to a particular setting by the second terminal.

Yet another embodiment of the invention provides a user terminal that includes: a display unit for displaying configurable list items; a window unit for showing a setting window on the display unit or assigning a portion of a screen corresponding to the display unit as a list arrangement area for configuring a setting; and a selection unit for selecting at least one of the displayed configurable list items and listing in the setting window or the list arrangement area. Here, the configurable list items listed in the setting window or the list arrangement area may be collectively configured to a particular setting.

A method of collectively configuring list items according to an embodiment of the invention makes it possible to include configurable list items, such as program list items, for example, in a setting window and then collectively configure the list items to a setting, such as for applying viewing restrictions, etc. Thus, the configuring of the setting for viewing restrictions, etc., can be performed in a much shorter amount of time and in a convenient manner.

Additional aspects and advantages of the present invention will be set forth in part in the description which follows, and in part will be obvious from the description, or may be learned by practice of the invention.

### BRIEF DESCRIPTION OF THE DRAWINGS

FIG. 1 illustrates a method of collectively configuring list items according to a first disclosed embodiment of the invention.
FIG. 2 illustrates a method of collectively configuring list items according to a second disclosed embodiment of the invention.
FIG. 3 illustrates a method of collectively configuring list items according to a third disclosed embodiment of the invention.
FIG. 4 illustrates a method of collectively configuring list items according to a fourth disclosed embodiment of the invention.
FIG. 5 illustrates a method of collectively configuring list items according to a fifth disclosed embodiment of the invention.
FIG. 6 illustrates a method of collectively configuring list items according to a sixth disclosed embodiment of the invention.
FIG. 7 illustrates a method of collectively configuring list items according to a seventh disclosed embodiment of the invention.
FIG. 8 illustrates a method of collectively configuring list items according to an eighth disclosed embodiment of the invention.
FIG. 9A and FIG. 9B illustrate a method of collectively configuring list items according to a ninth disclosed embodiment of the invention.
FIG. 10 illustrates a method of collectively configuring list items according to a tenth disclosed embodiment of the invention.
FIG. 11 illustrates a method of collectively configuring list items according to an eleventh disclosed embodiment of the invention.
FIG. 12 illustrates a method of collectively configuring list items according to a twelfth disclosed embodiment of the invention.
FIG. 13 illustrates a method of collectively configuring list items according to a thirteenth disclosed embodiment of the invention.
FIG. 14 is a block diagram illustrating the composition of a user terminal according to an embodiment of the invention.

### DETAILED DESCRIPTION

Certain embodiments of the present invention will be described below in more detail with reference to the accompanying drawings.

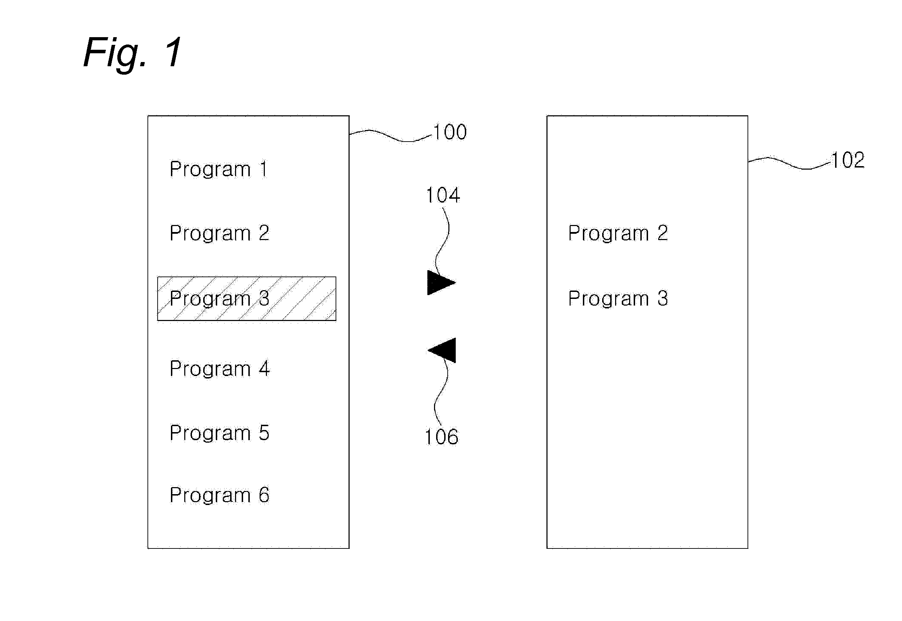

FIG. 1 illustrates a method of collectively configuring list items according to a first disclosed embodiment of the invention.

As illustrated in FIG. 1, a guide 100 and a setting window 102 can be displayed on the screen of a user terminal. Here, the user terminal can be any device capable of displaying images, such as a tablet PC and a smart TV for displaying broadcasts, for example.

The guide 100 may be a program guide including at least one program list items, where the term program is intended to encompass broadcast programs, VOD programs, recorded files, and the like. Although FIG. 1 illustrates an example in which program list items are shown within a guide 100, it is also possible to show the program list items directly on the screen without the guide 100. For convenience, it will be assumed that the program list items are included within the guide 100 in the descriptions that follow.

The setting window 102 may be a box for collectively configuring at least one program list items included within. The setting window 102 can be shown on the screen as a box, as illustrated in FIG. 1, but can also be a partial area (a list arrangement area) of the screen in which to contain the program list items. According to an embodiment of the invention, the setting window 102 can be displayed on a screen of the user terminal in response to a user's input, such as the user's action of selecting a particular button on a remote control device. The form of the box for the setting window 102 is not limited to a particular shape and can be rectangular, circular, etc.

When the user selects some of the program list items in the guide 100, the selected program list items can be copied or moved to the setting window 102. For example, if the user selects a particular program list item, e.g. program 3, and afterwards selects a move icon 104 by way of the remote control device, then program 3 can be copied or moved to the setting window 102, as illustrated in FIG. 1. In another example, if the user selects a particular program list item of the guide 100 through a touch means such as a finger or a touch pen, etc., and moves the touch means towards the setting window 102, then the program list item can be copied or moved to the setting window 102. In still another example, if the user selects a particular program list item within the guide 100 and applies a long press on a particular button of a remote control device, then the particular program list item can be copied or moved to the setting window 102. In yet another example, if a particular program list item within the guide is selected by way of a touch pad formed on a remote control device, and the touch means is moved on the touch pad, then the selected program list item can be copied or moved to the setting window 102. That is, the user can use various systems to copy or move at least some of the program list items in the guide 100 to the setting window 102 so that they may be included in the setting window 102.

According to an embodiment of the invention, the programs corresponding to the program list items included in the setting window 102 can be collectively configured to a particular setting. For example, a viewing restriction can be configured collectively for programs corresponding to the program list items included in setting window 102. In a more specific example, once the program list items corresponding to the programs in the setting window 102 are selected by any of a variety of methods, such as selecting from an EPG, the selected program list items may not be immediately displayed on the screen of the user terminal, but rather an input prompt requesting the input of a password can be displayed. If the user inputs the correct password, the viewing restriction (lock) can be disabled and the corresponding program can be displayed as usual. That is, a common setting for viewing restriction may be applied to the program list items in the setting window 102, and preferably, a password for disabling the viewing restriction can also be configured commonly to the program list items of the setting window 102. In this case, when a user wishes to view the programs corresponding to the program list items included in the setting window 102, an input prompt demanding a password may be displayed on the screen of the user terminal, and the user can watch a corresponding program as usual only if the password commonly configured for the program list items is inputted.

According to another embodiment of the invention, a viewing restriction setting may be applied commonly to the program list items included in the setting window 102, but at least one of the program list items can be configured with a setting different from the setting with which the other program list items are configured. For example, a viewing restriction setting may be applied commonly to the program list items included in the setting window 102, but while a first password may be applied to certain program list items, a second password different from the first password may be applied to other program list items. In another example, a viewing restriction setting and a password may be applied commonly to the program list items included in the setting window 102, but the viewing restriction may apply from 5 to 10 p.m. for certain program list items, whereas the viewing restriction may apply all 24 hours of the day for other program list items. In still another example, a viewing restriction setting may be applied commonly to the program list items included in the setting window 102, but certain program list items (e.g. "Crayon Shin-chan") may be subject to the viewing restriction for users of a first account (e.g. "preschooler") only and not for users of other accounts, while other program list items (e.g. "adult broadcasts") may be subject to the viewing restriction for users of a second account (e.g. middle school children) only and not for users of other accounts

In another embodiment of the invention, the user terminal can save the settings of the setting window 102 itself and the information related to the program list items included in the setting window 102 in the user terminal's own memory or in an outside server (not shown).

Although it is not described above, the user can delete or move at least one of the program list items included in the setting window 102 by various methods such as using a move icon 106, etc. That is, the common setting may be disabled for some of the program list items included in the setting window 102.

The program list items in the setting window 102 can be incorporated into list items for which viewing is restricted. For example, supposing program 1 was already configured as a viewing-restricted list item, if the user includes program 2 and program 3 in the setting window 102, then program 2 and program 3 can be incorporated into the viewing-restricted list items. Thus, in various environments, the user can include the desired program list items into the corresponding setting windows 102, by which the program list items can be automatically incorporated as viewing-restricted list items.

Although the setting window 102 is described as a window for configuring a viewing restriction setting in the example described above, it can just as well be applied for various other purposes, such as a window for preferred channels, a window for MY channel schedule, etc. In any case, at least one common setting may be applied for program list items in a setting window 102.

For example, in cases where the setting window 102 is a window for preferred channels, if the user includes at least one program list item in the setting window 102, the program list items in the setting window 102 can be automatically configured as list items for preferred channels.

In another example, in cases where the setting window 102 is a window for MY channel schedule, if the user includes at least one program list item in the setting window 102, the program list items in the setting window 102 can be automatically configured as list items for MY channel schedule. Thus, the user terminal can automatically display programs corresponding to the list items of MY channel schedule at the designated times. In other words, the user can configure the respective display times for the program list items included in the setting window 102.

In short, a setting window 102 can be displayed on the screen of the user terminal according to an embodiment of the invention, and by including certain program list items in the setting window 102, at least one setting can be applied commonly to the program list items included in the setting window 102.

According to another embodiment of the invention, the user may include in the setting window 102 the program list items which the user wishes to recommend to or share with another person, and the program list items included in the setting window 102 can be transmitted to and saved in the other person's terminal or an outside server. If the other person selects one of the transmitted program list items, then a file corresponding to the selected program list item can be transmitted from the user terminal to the other person's terminal for display, or can be transmitted from another outside server to the other person's terminal for display. Alternatively, the other person's terminal can search for a program corresponding to the program list item from within the broadcast channels and activate the relevant broadcast channel. Of course, the terminal receiving the program list item can also be a terminal belonging to the owner of the user terminal.

According to yet another embodiment of the invention, a collective setting can be applied to the program list items in the setting window 102, but with a detailed viewing restriction setting, etc., made for each individual program list item. For example, if the user selects a particular program within the setting window 102 by a method such as applying a long press on a particular button of a remote control, then a separate window can be displayed by which to configure the viewing restriction on the program in more detail. That is, the user can apply a common setting for the program list items by using the setting window 102, and apply detailed settings for the individual program list items if necessary.

Although the descriptions above illustrate a collective setting being applied on program list items, it is also possible to apply a collective setting on channel list items as well as program list items. In the descriptions that follow, the term "configurable list item" is used, as a concept encompassing all types of list items, including program list items, channel list items, etc. That is, configurable list items are list items that can be configured to a collective setting, including program list items, channel list items, and the like.

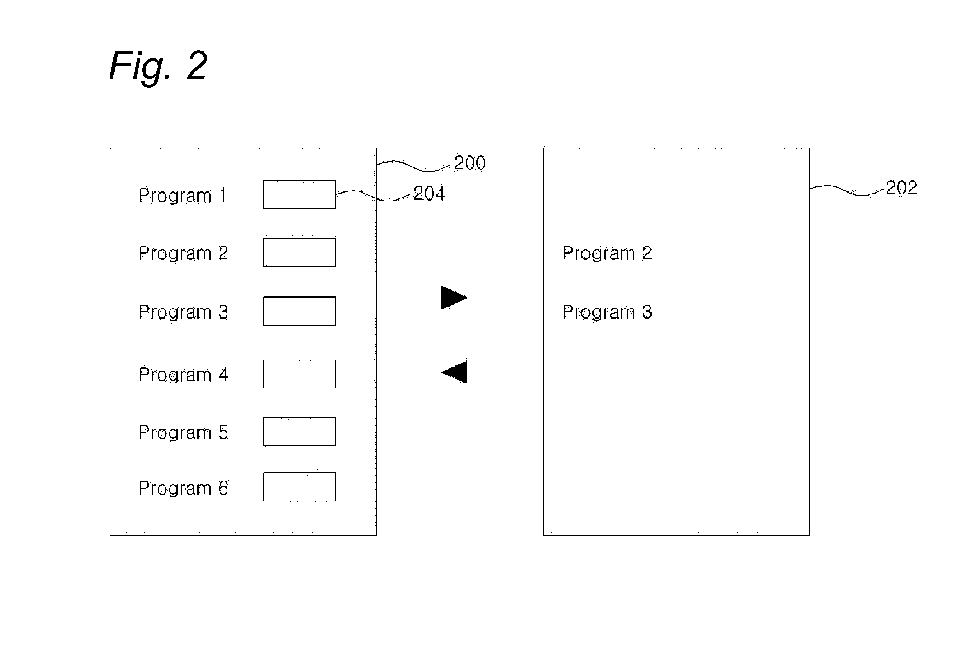

FIG. 2 illustrates a method of collectively configuring list items according to a second disclosed embodiment of the invention.

Referring to FIG. 2, the guide 200 can show not only the configurable list items but also PIP images 204 (or descriptions) related to the respective configurable list items. By thus including PIP images 204 or descriptions in the guide 200, the user can more easily select the configurable list items that are to be configured when configuring a setting such as for viewing restrictions, etc. In this case, a PIP image or description can also be shown near each program list item included in the setting window 202, but since the related image or description would have been seen in the guide 200, it may not be necessary to show the PIP image or description in the setting window 202.

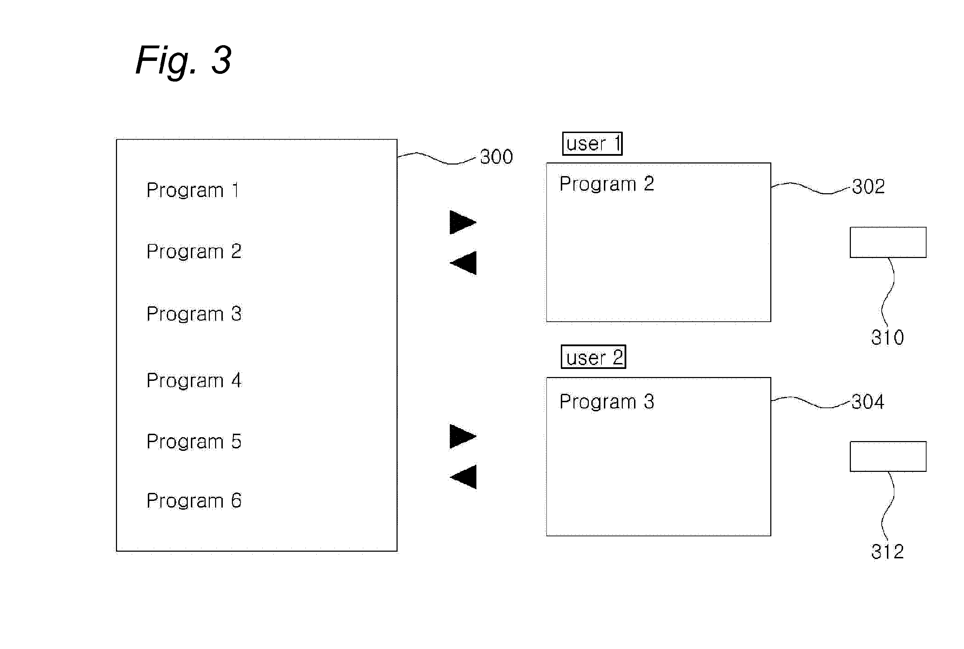

FIG. 3 illustrates a method of collectively configuring list items according to a third disclosed embodiment of the invention.

Referring to FIG. 3, the user terminal can display a multiple number of setting windows 302 and 304, and the user can copy or move the configurable list items in the guide 300 to a corresponding setting window 302 or 304.

For instance, the setting window 302 can be a window for users of a first account, while the setting window 304 can be a window for users of a second account. In one example, the user can include the configurable list item of "Crayon Shin-chan" in the setting window 302 for users of a first account ("preschooler") and can include the configurable list item of "adult broadcast" in the setting window 304 for users of a second account ("middle school children"). Here, the setting windows 302 and 304 can be windows by which to apply viewing restriction settings.

According to another embodiment of the invention, input windows 310 and 312 for configuring passwords, etc., for the setting windows 302 and 304 can be shown in correspondence to the respective setting windows 302 and 304.

According to still another embodiment of the invention, different settings can be configured for the setting windows 302 and 304. For example, the setting window 302 can be a window for setting viewing restrictions, while the setting window 304 can be a window for setting preferred channels. That is, the user can concurrently configure various settings, such as for viewing restrictions, preferred channels, MY channel schedule, etc., by using multiple setting windows.

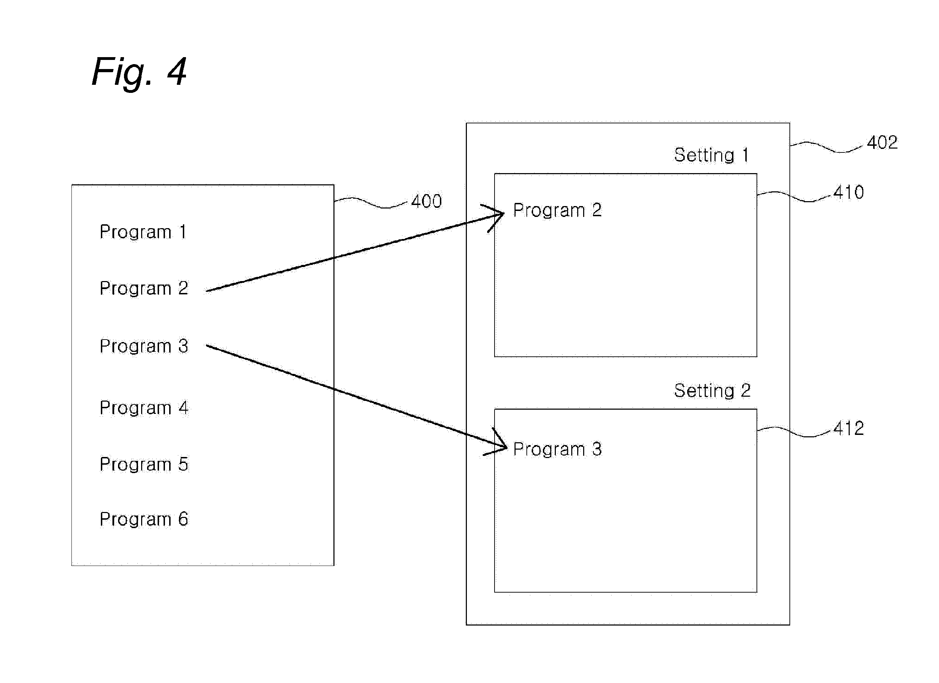

FIG. 4 illustrates a method of collectively configuring list items according to a fourth disclosed embodiment of the invention.

Referring to FIG. 4, a guide 400 and a setting window 402 can be displayed on the screen of the user terminal.

The setting window 402 can include a multiple number of sub setting windows 410 and 412.

The sub setting windows 410 and 412 can be configured with different settings. For instance, the sub setting window 410 can be configured to have a first password set for disabling viewing restrictions, while the sub setting window 412 can be configured to have a second password set for disabling viewing restrictions. Here, the second password may be different from the first password. In another example, the sub setting windows 410 and 412 may all be configured with a viewing restriction setting but with different times at which viewing is restricted.

In short, a user terminal according to this embodiment can configure sub setting windows with different settings, and the user can copy or move the configurable list items to separate setting windows. Thus, the user can configure a viewing restriction setting, etc., for the configurable list items, and in particular, can apply additional settings differently for the configurable list items by using the sub setting windows. Of course, the same configurable list item can be included in all of the sub setting windows, in which case the configurable list item would be applied with all of the settings of the sub setting windows.

Although FIG. 4 illustrates the sub setting windows 410 and 412 as being included within a setting window 402, the sub setting windows 410 and 412 can just as well be displayed on the screen without the setting window 402. Of course, in this case, the sub setting windows 410 and 412 can be referred to as setting windows.

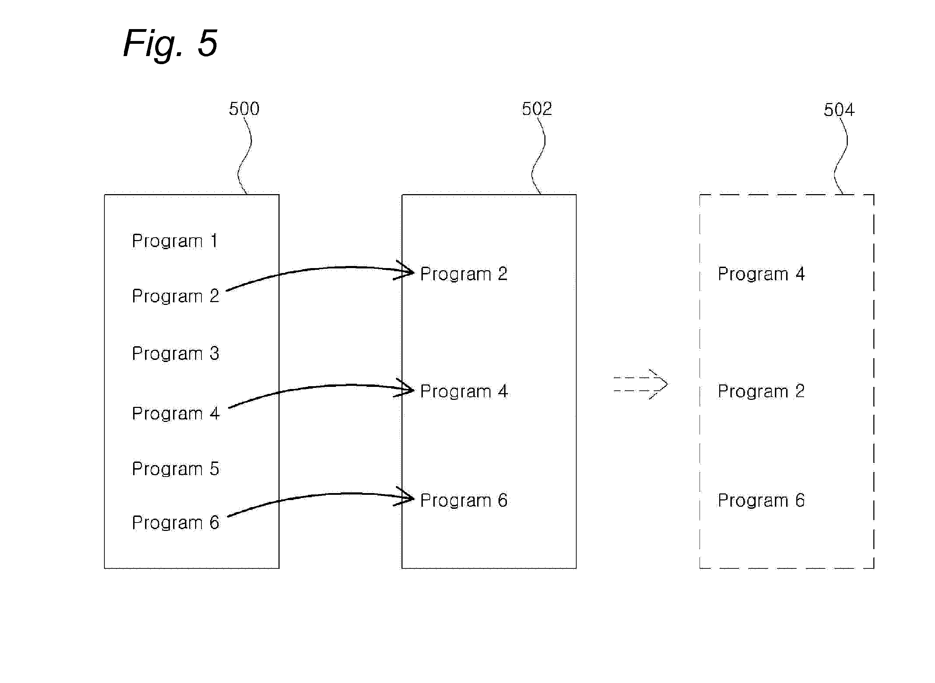

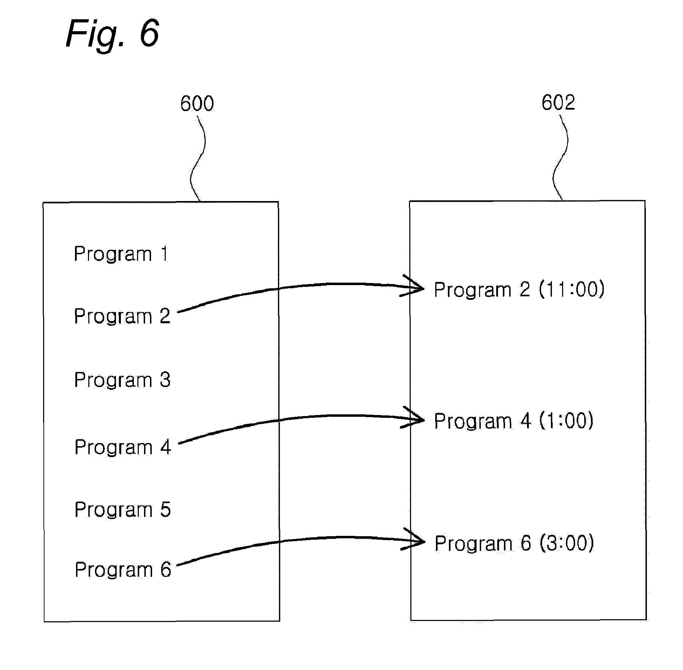

FIG. 5 illustrates a method of collectively configuring list items according to a fifth disclosed embodiment of the invention, and FIG. 6 illustrates a method of collectively configuring list items according to a sixth disclosed embodiment of the invention.

Referring to FIG. 5, a guide 500 and a setting window 502 can be displayed on the screen of the user terminal.

The order of the configurable list items in the setting window 502 can be changed according to user input, as illustrated in FIG. 5. For example, program 2, program 4, and program 6 may have been arranged in the setting window 502 initially, but the order can be changed to program 4, program 2, and program 6 according to user input. This function for changing the order can be advantageous for the MY channel schedule function. For instance, supposing that the programs corresponding to the configurable list items are displayed according to the order of arrangement in the setting window 502, the user may simply arrange the configurable list items in the setting window 502 in the desired sequence in which they are to be displayed. In this case, the user terminal can sequentially display the programs corresponding to the configurable list items in the setting window 502, or sequentially display the programs corresponding to the list items of MY channel schedule including the configurable list items in the setting window 502.

Referring to FIG. 6, a guide 600 and a setting window 602 can be displayed on the screen of the user terminal.

The user can also configure the display times of the configurable list items in the setting window 602. If the user configures the times for the configurable list items, then the programs corresponding to the configurable list items can be displayed on the user terminal at the configured times. Of course, in cases where the times are configured for the configurable list items, the arrangement order of the configurable list items may be unrelated to the display order. Alternatively, the configurable list items can be automatically arranged in order within the setting window 602 according to the configured times.

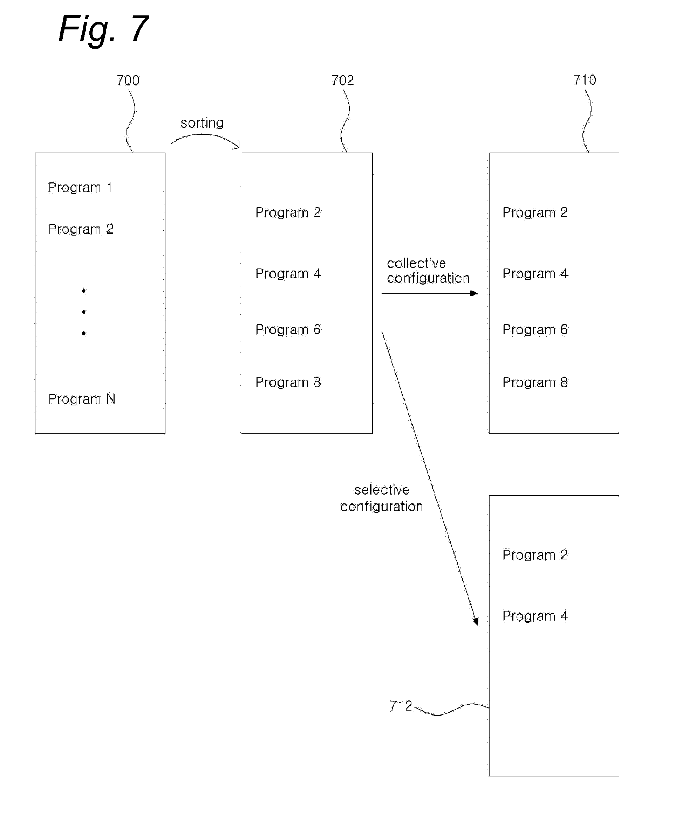

FIG. 7 illustrates a method of collectively configuring list items according to a seventh disclosed embodiment of the invention.

Referring to FIG. 7, a guide 700 and a selection window 702 can be displayed on the screen of the user terminal.

If the user performs a search of the configurable list items of the guide 700 in relation to a particular condition, then the configurable list items corresponding to the particular condition may be shown in the selection window 702. In this case, the user can include all of the configurable list items in the selection window 702 collectively into the setting window 710 to apply a particular setting. For instance, the user can search "adult" in the configurable list items of the guide 700 to select adult programs, and then configure viewing restrictions for all of the adult programs thus selected.

According to another embodiment of the invention, it is also possible to select only some of the configurable list items included in the selection window 702 and include them in the setting window 712. In this case, a particular setting can be commonly applied to the programs of channels corresponding to the certain selected configurable list items. For instance, the user can search "variety" in the configurable list items in the guide 700 to select variety programs, and from among the selected variety programs, include those variety programs related to dating in the setting window 712, to configure viewing restrictions on these programs for children.

In short, a user terminal according to an embodiment of the invention can divide the configurable list items according to the user's input and then use the setting windows to commonly apply particular settings to corresponding configurable list items. As the development of the smart TV has led to a considerable amount of contents, it may be difficult to apply a particular setting by looking through the configurable list items overall. Thus, the numerous configurable list items can be grouped preliminarily or in several steps, after which a particular setting can be applied commonly to certain configurable list items by using the grouped configurable list items. This can make it considerably easier for a user to configure settings. Such method of grouping and applying particular settings can be employed for any of the embodiments described above as well as any of the embodiments described below.

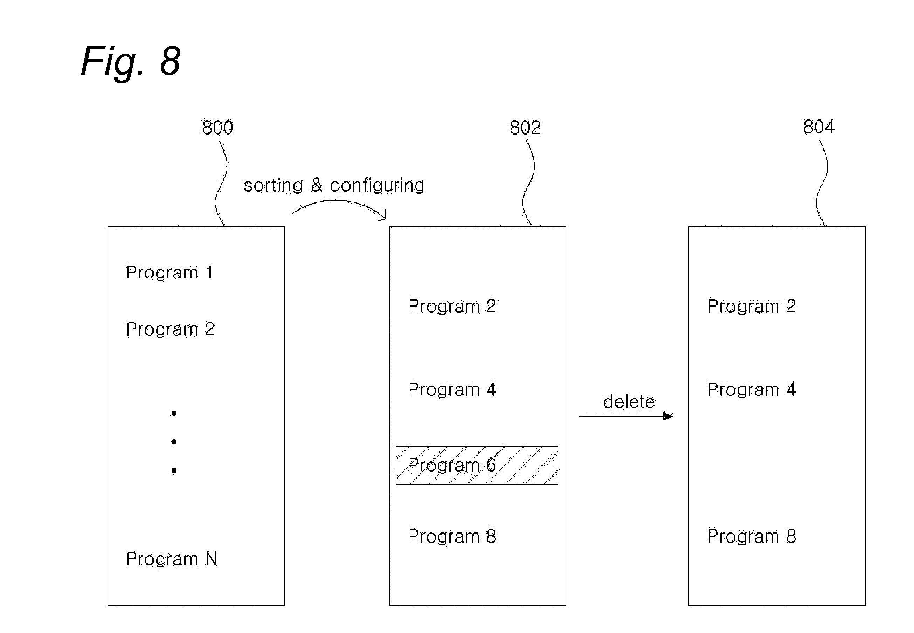

FIG. 8 illustrates a method of collectively configuring list items according to an eighth disclosed embodiment of the invention.

Referring to FIG. 8, by performing a search on the configurable list items of the guide 800 according to user input, the configurable list items found by the search can be automatically included in the setting window 802. That is, unlike the seventh disclosed embodiment in which the configurable list items found by the search are included in the selection window, the configurable list items found by the search may be included directly in the setting window 802. Of course, a particular setting may be applied automatically to the configurable list items included in the setting window 802.

According to an embodiment of the invention, at least some of the configurable list items included in the setting window 802 can be selected and deleted by the user, and as a result, the setting window 802 can be changed to the setting window 804. This deletion function can be commonly applied to the embodiments described above as well as the embodiments described below.

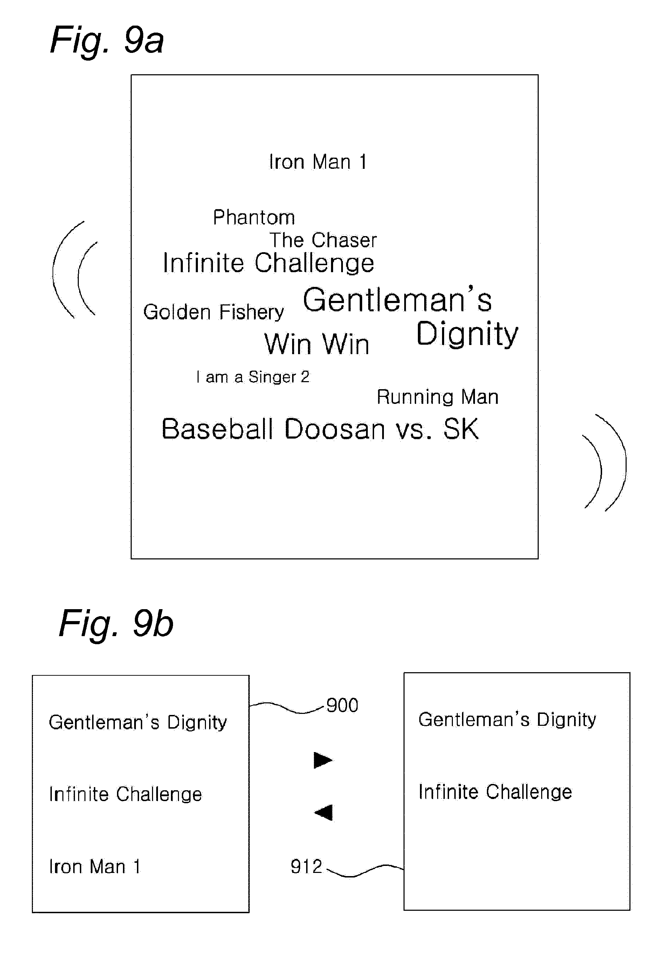

FIG. 9A and FIG. 9B illustrate a method of collectively configuring list items according to a ninth disclosed embodiment of the invention.

As illustrated in FIG. 9A, the configurable list items (tags) can be shown on the screen of the user terminal in a dynamically moving manner according to viewership ratings. Here, the configurable list items can vary in size, color, or shape according to viewership ratings, etc.

According to an embodiment of the invention, if the user shakes the user terminal or a remote control device connected with the user terminal, for example, then at least some of the configurable list items can be included in the window 900 according to viewership ratings, etc. Here, the user can include at least some of the configurable list items of the window 900 into the setting window 912 to apply a common setting. The remote control device can be any device for communicating with the user terminal, and can be a remote control, a smart phone, etc., capable of controlling the operations of the user terminal.

The method of collectively configuring list items according to this embodiment may be advantageously employed in implementing a MY channel schedule function. For instance, the user can arrange the programs according to viewing and include only the desired programs into the setting window 912 for sequential display or for configuring as preferred programs.

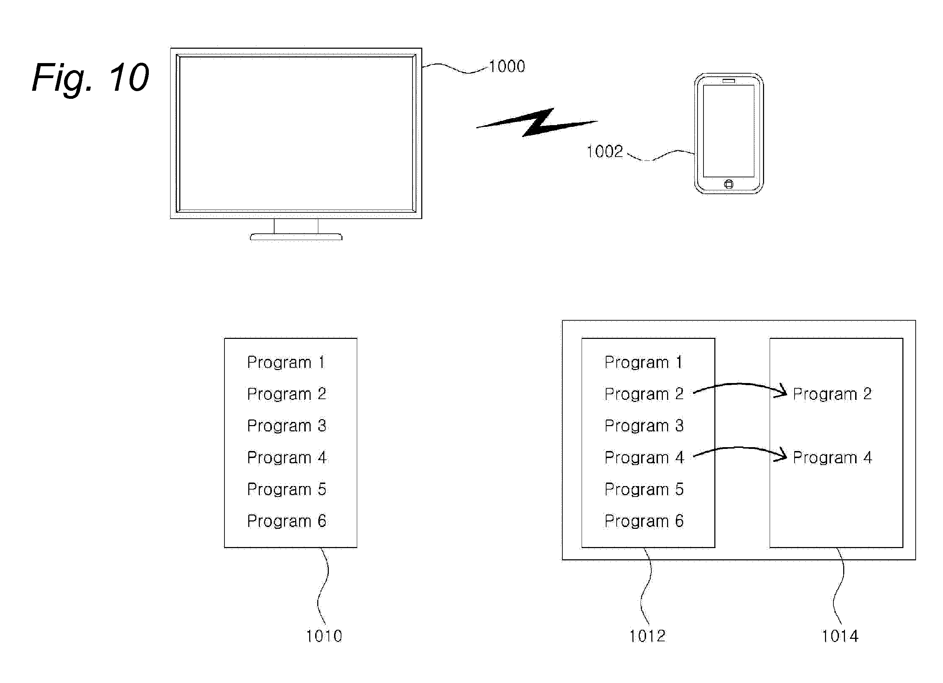

FIG. 10 illustrates a method of collectively configuring list items according to a tenth disclosed embodiment of the invention.

Referring to FIG. 10, the user terminal 1000 may be connected with a remote control device 1002 via a wireless or a wired connection. The remote control device 1002 can be any device that is connected with and is capable of exchanging signals with the user terminal. For example, the remote control device 1002 can be a remote control, a smart phone, etc.

If the user selects a particular button with the remote control device 1002 while the guide 1010 is displayed on the user terminal 1000, then all or some of the configurable list items of the guide 1010 can be displayed on the screen of the remote control device 1002. The user can include at least some of the configurable list items of the guide 1012 on the remote control device 1002 into the setting window 1014, to commonly apply a particular setting.

That is, unlike the other embodiments in which a particular setting is commonly applied for configurable list items at the user terminal, this embodiment can commonly apply a particular setting for configurable list items at the remote control device 1002. Of course, the concepts from the embodiments described above can also be applied to the present embodiment.

In this case, during the procedures for applying a particular setting to configurable list items with the remote control device 1002, the user terminal 1000 can display the same screen as that of the remote control device, but preferably, the user terminal 1000 can display a different screen. That is, the user can apply a particular setting for the configurable list items with the remote control device 1002 while watching a desired program on the user terminal 1000. Of course, the information on the configurable list items configured by the remote control device 1002 can be transmitted to the user terminal 1000 for configuration, and the user terminal 1000 can commonly configure the configurable list items to the particular setting and control the corresponding programs according to the configuration.

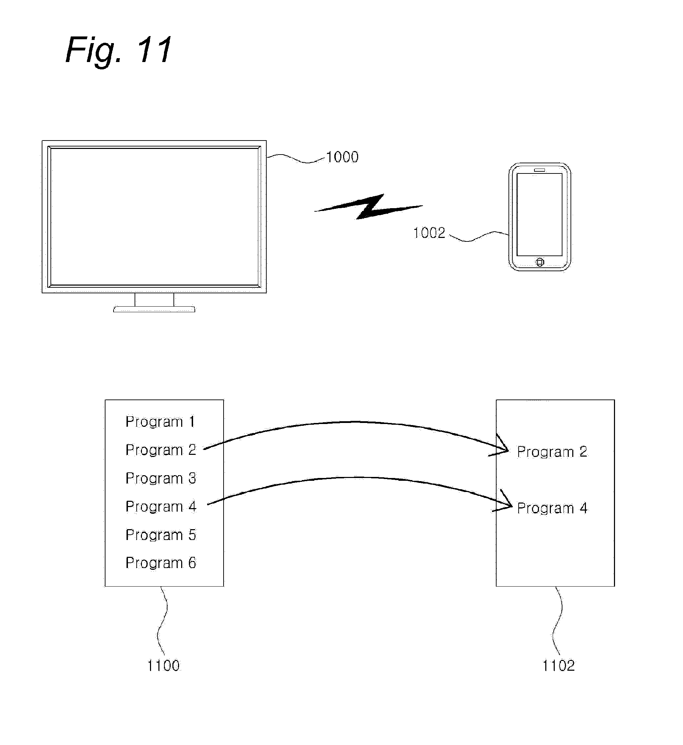

FIG. 11 illustrates a method of collectively configuring list items according to an eleventh disclosed embodiment of the invention.

Referring to FIG. 11, the configurable list items of a guide 1100 can be displayed on the user terminal 1000, while a setting window 1102 can be displayed on the remote control device 1002. In this case, the user can select a particular configurable list item on the user terminal 1000 with the remote control device 1002, and the selected configurable list item can be included into and displayed on the setting window 1102 of the remote control device 1002.

The user can arbitrarily configure the order, times, etc., of the configurable list items included in the setting window 1102 by a touch method, etc. In this case, the screen displayed on the user terminal 1000 can be different from that of the remote control device 1002; for example, a particular program can be displayed.

That is, the setting window 1102 can be implemented on the remote control device 1002, so that the user may arbitrarily edit the configurable list items by using the remote control device 1002, while viewing a program on the user terminal 1000 without interruption.

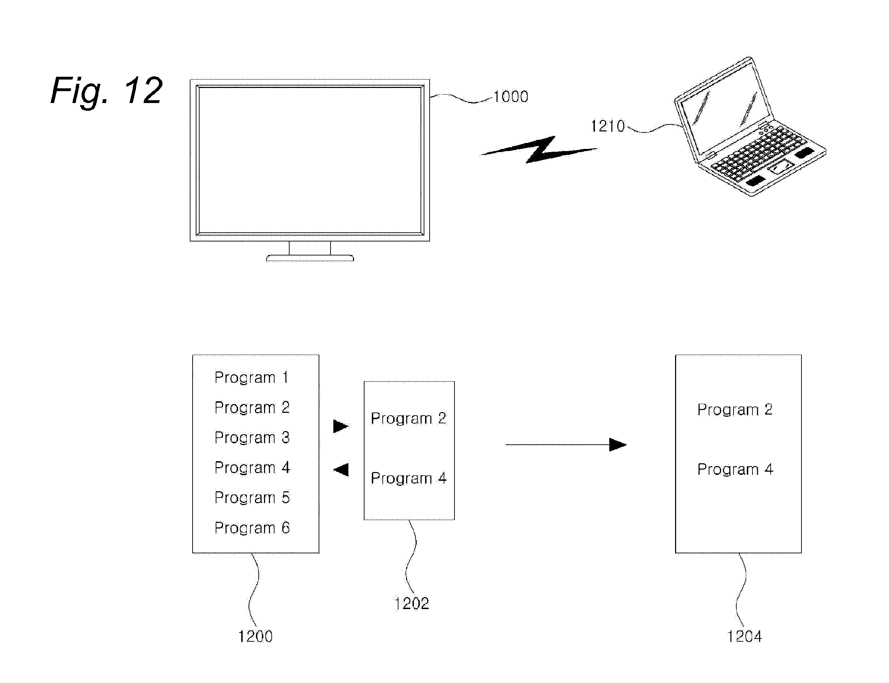

FIG. 12 illustrates a method of collectively configuring list items according to a twelfth disclosed embodiment of the invention.

Referring to FIG. 12, the user can use a guide 1200 and a setting window 1202 at the user terminal 1000 to include configurable list items into the setting window 1202.

Next, the user can select a transfer menu, for example, by which the information on the configurable list items included in the setting window 1202 can be transferred to another terminal 1210. Here, the setting window 1202 can be a window for MY channel schedule.

If the user selects some of the configurable list items displayed on the other terminal 1210, then a program corresponding to the selected configurable list item can be displayed on the other terminal 1210. Here, the program can be transmitted from the user terminal 1000 to the other terminal 1210 or can be transmitted from a broadcasting station or an outside server to the other terminal 1210.

In short, a method of collective configuration according to this embodiment can implement an N-screen function, where the desired configurable list items can be included in the setting window 1202 and collectively transmitted to another terminal 1210. The other terminal 1210 can display the setting window 1204 received from the user terminal 1000.

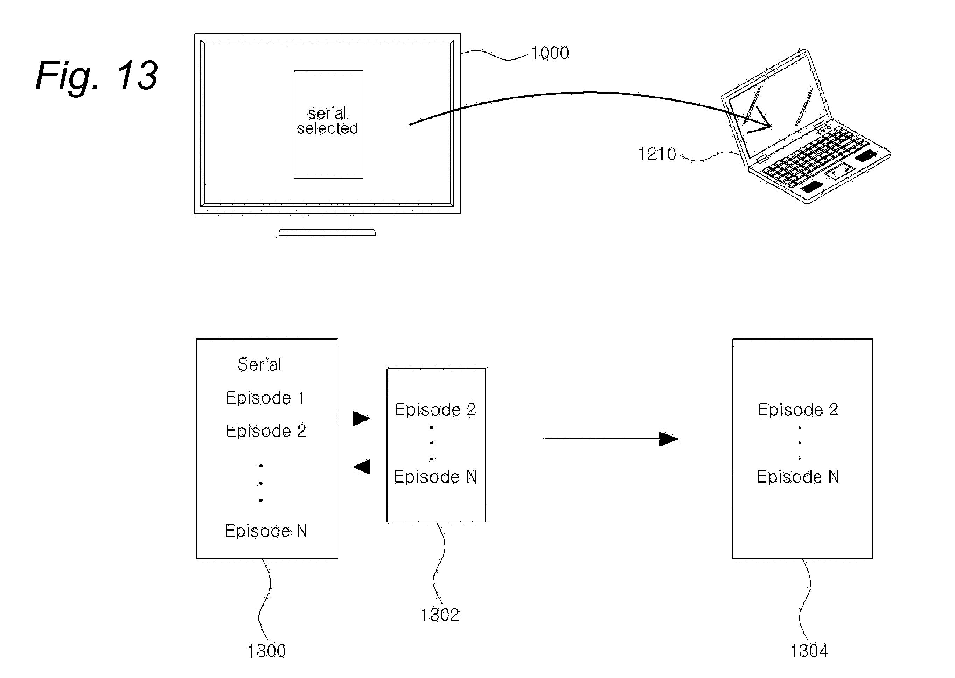

FIG. 13 illustrates a method of collectively configuring list items according to a thirteenth disclosed embodiment of the invention.

Referring to FIG. 13, the user terminal 1000 can transmit the image of the screen to another terminal 1210 for displaying. In this case, while transmitting the screen image, the user can include at least some parts of a serial in the setting window 1302 and transmit these to the other terminal 1210. Also, the other terminal 1210 can show the setting window 1304. Thus, a program that was currently being viewed can be continued on the other terminal 1210, while the configurable list items for programs of a serial related to the program can be included in the setting window 1302. With this simple operation, a user can continue viewing on the other terminal 1210.

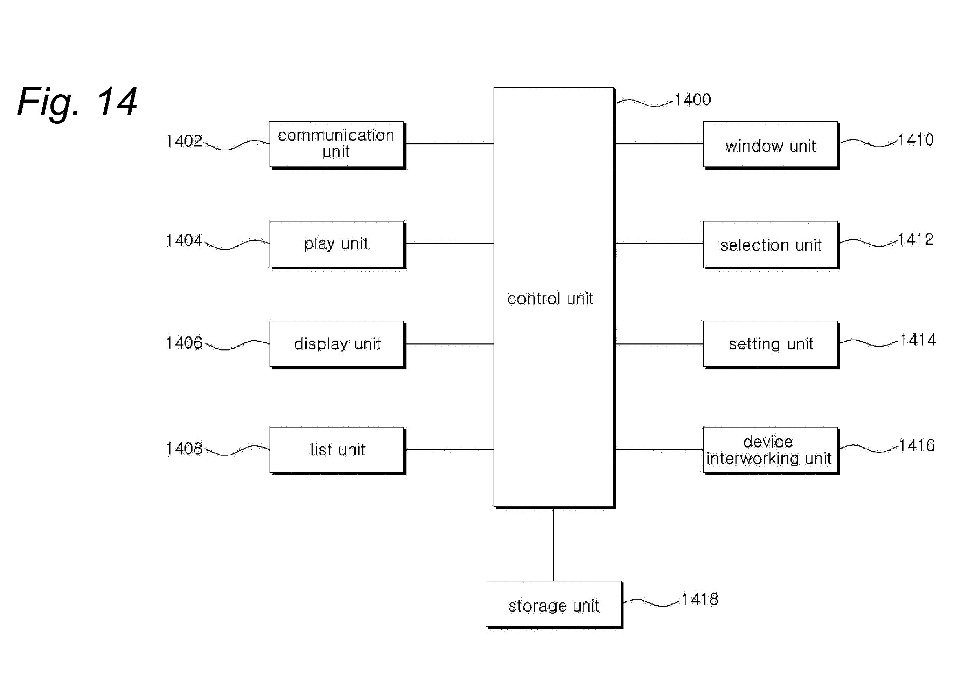

FIG. 14 is a block diagram illustrating the composition of a user terminal according to an embodiment of the invention.

Referring to FIG. 14, a user terminal according to this embodiment can include a control unit 1400, a communication unit 1402, a play unit 1404, a display unit 1406, a list unit 1408, a window unit 1410, a selection unit 1412, a setting unit 1414, a device interworking unit 1416, and a storage unit 1418.

The communication unit 1402 may serve as a communication channel with an outside device, such as, for example, a remote control device, etc.

The play unit 1404 may manage the functions related to the playing of a program.

The display unit 1406 may perform the function of displaying configurable list items, windows, etc., and can be any device such as an LCD, OLED, PDP, etc.

The list unit 1408 may manage the operations associated with the configurable list items, such as the composition of the configurable list items, their display modes, etc.

The window unit 1410 may manage the various windows, such as the setting window, selection window, etc.

The selection unit 1412 may perform the function of selecting at least one of the configurable list items displayed on the user terminal, remote control device, etc., and including them in the setting window.

The setting unit 1414 may perform functions related to configuring the conditions for the setting window, applying particular settings for the configurable list items, etc.

The device interworking unit 1416 may perform the function of interworking the user terminal with an outside terminal.

The storage unit 1418 may save various data such as the configurable list items, etc.

The control unit 1400 may control the overall operation of the components of the user terminal.

The embodiments of the invention described above are disclosed for illustrative purposes. Those of ordinary skill in the art to which the present invention pertains would understand that various modifications, alterations, and additions can be made without departing from the spirit and scope of the invention, and that such modifications, alterations, and additions are encompassed by the scope of claims defined below.

## Claims

1. A method of collectively configuring list items at a terminal, the method comprising:
selecting at least one from among configurable list items; and
including the selected configurable list items in a first setting window,
wherein the configurable list items included in the first setting window are collectively configured to a particular setting.

2. The method of claim 1, wherein the particular setting is at least one of a viewing restriction setting, a preferred channel setting, and a MY channel schedule setting, and the configurable list items comprise live broadcast list items, channel list items, VOD list items, or recordings list items.

3. The method of claim 1, wherein the configurable list items included in the first setting window are configured to have viewing restrictions applied thereto,
and when a program corresponding to the configurable list items is selected, a lock on the program is disabled by inputting a common password.

4. The method of claim 1, wherein the configurable list items included in the first setting window are collectively configured to a first setting, while one or some of the configurable list items are configured to a second setting and others of the configurable list items are not configured to a second setting.

5. The method of claim 1, wherein a guide is displayed on a screen of the terminal, the guide including configurable list items, and if at least one of the configurable list items within the guide are selected, the selected configurable list items are automatically copied or moved to the first setting window.

6. The method of claim 1, wherein a guide is displayed on a screen of the terminal, the guide including configurable list items,
and a PIP image or description related to a corresponding configurable list item is shown near the configurable list items.

7. The method of claim 1, wherein the first setting window and a second setting window are displayed on the terminal,
at least one configurable list item is included in the second setting window, the configurable list items included in the first setting window are configured to a first setting, and the configurable list items included in the second setting window are configured to a second setting different from the first setting.

8. The method of claim 1, wherein the terminal includes a plurality of configurable list items,
at least one of the configurable list items are selected by a search in accordance with user input, and at least one of the selected configurable list items are included in the first setting window.

9. A method of collectively configuring list items at a terminal, the method comprising:
displaying configurable list items; and
collectively configuring at least one of the displayed configurable list items to a particular setting.

10. The method of claim 9, wherein the configurable list items configured to the particular setting are shown within a setting window or are listed in a partial area of a screen of the terminal.

11. A method of collectively configuring list items at a terminal, the method comprising:
receiving configurable list items from a first terminal, by a second terminal; and
collectively configuring at least one of the received configurable list items to a particular setting, by the second terminal.

12. The method of claim 11, wherein the second terminal has a setting window shown thereon,
and the second terminal includes at least one of the received configurable list items in the setting window to collectively configure to the particular setting.

13. The method of claim 11, wherein the second terminal is capable of editing the configurable list items configured to the particular setting, and the first terminal has a screen different from a screen of the second terminal during the editing of the configurable list items by the second terminal.

14. A user terminal comprising:
a display unit for displaying configurable list items;
a window unit for showing a setting window on the display unit or assigning a portion of a screen corresponding to the display unit as a list arrangement area for configuring a setting; and
a selection unit for selecting at least one of the displayed configurable list items and listing in the setting window or the list arrangement area,
wherein the configurable list items listed in the setting window or the list arrangement area are collectively configured to a particular setting.

15. The user terminal of claim 14, further comprising:
a device interworking unit for interworking the user terminal with another terminal,
wherein the device interworking unit transmits at least one of the configurable list items displayed on the display unit or at least one of the configurable list items included in the setting window or the list arrangement area to the another terminal,
and the particular setting is at least one of a viewing restriction setting, a preferred channel setting, and a MY channel schedule setting, and the configurable list items comprise live broadcast list items, channel list items, VOD list items, or recordings list items.
